# FASCICULE DE BREVET EUROPEEN

(11) **EP 2 598 454 B1**
(45) Date de publication et mention de la délivrance du brevet: **10.09.2014**
(21) Numéro de dépôt: 11754702.6
(22) Date de dépôt: 19.07.2011
(51) Int. Cl.: C03C 17/36, B05D 5/12

(54) **PROCEDE D'OBTENTION D'UN MATERIAU COMPRENANT UN SUBSTRAT MUNI D'UN REVETEMENT**
VERFAHREN ZUR HERSTELLUNG EINES MATERIALS MIT EINEM SUBSTRAT MIT EINER BESCHICHTUNG
METHOD FOR PRODUCING A MATERIAL INCLUDING A SUBSTRATE PROVIDED WITH A COATING

(30) Priorité: 27.07.2010 FR 1056165
(43) Date de publication de la demande: 05.06.2013
(73) Titulaire: Saint-Gobain Glass France, 92400 Courbevoie (FR)
(72) Inventeur: KHARCHENKO, Andriy, F-91120 Palaiseau (FR)
(74) Mandataire: Teyssedre, Laurent
(86) Numéro de dépôt international: PCT/FR2011/051733
(87) Numéro de publication internationale: WO 2012/022874

(56) Documents cités:
- WO-A1-02/04549
- US-A1- 2002 176 988
- US-A1- 2008 318 033
- US-B1- 6 503 630

## Description

L'invention se rapporte au domaine des matériaux comprenant un substrat, notamment en verre, muni sur au moins une de ses faces d'un revêtement permanent comprenant au moins une couche mince.

Fréquemment, de tels matériaux doivent subir des traitements thermiques, destinés à améliorer les propriétés du substrat et/ou du revêtement permanent. Il peut par exemple s'agir, dans le cas de substrats en verre, de traitement de trempe thermique destinés à renforcer mécaniquement le substrat en créant de fortes contraintes de compression à sa surface. De tels traitements peuvent également améliorer certaines propriétés du revêtement permanent, notamment en améliorant les caractéristiques de cristallisation de couches minces comprises dans le revêtement. Par exemple, un revêtement permanent comprenant une couche d'argent, qui possède des propriétés de faible émissivité et de conduction électrique, voit ces propriétés améliorées lorsque sa structure cristalline est de meilleure qualité : grains de plus grande taille, diminution des joints de grains etc. Il en est de même pour les oxydes transparents électro-conducteurs, fréquemment qualifiés « TCO » d'après leur acronyme anglais, par exemple l'oxyde d'indium et d'étain (ITO) ou les oxydes de zinc dopé au gallium ou à l'aluminium. Le dioxyde de titane voit quant à lui ses propriétés photocatalytiques améliorées par des traitements thermiques permettant d'accroître son degré de cristallinité sous la forme anatase.

Il est connu de soumettre des substrats munis de tels revêtements à des traitements de trempe thermique ou de recuit, dans des fours de trempe ou de recuisson, ou encore à des traitements de recuit rapide, par exemple à l'aide d'une flamme, d'une torche plasma ou d'un rayonnement laser, tel que décrit dans la demande WO 2008/096089.

Certaines couches du revêtement permanent peuvent toutefois être dégradées lors du traitement thermique si elles ne sont pas protégées de manière adéquate. Par exemple, une couche de TCO soumise à une trempe thermique doit être temporairement protégée de l'oxydation, éventuellement à l'aide d'une couche de protection en nitrure de silicium. Cette couche de protection doit ensuite être éliminée, généralement par un traitement long et coûteux de gravure. Le traitement de recuit rapide de certaines couches peut être amélioré par la présence de couches absorbant le rayonnement infrarouge, en particulier dans le cas de traitement à l'aide d'une flamme ou d'un rayonnement laser. Il peut donc être utile de disposer au dessus du revêtement permanent un revêtement temporaire comprenant une telle couche absorbante. S'il n'est pas éliminé lors du recuit, le revêtement temporaire doit être éliminé après le traitement, par exemple par des procédés de gravure.

La demande US2002/0176988 décrit le dépôt de couches temporaires solubles dans l'eau destinées à protéger des couches fonctionnelles déposées sur des substrats.

L'invention a pour but d'obvier à ces inconvénients en proposant un procédé plus simple et moins coûteux.

A cet effet, l'invention a pour objet un procédé d'obtention d'un matériau comprenant un substrat muni sur au moins une de ses faces d'un revêtement permanent comprenant au moins une couche mince, ledit procédé comprenant les étapes suivantes :
- on dépose sur au moins une des faces dudit substrat ledit revêtement permanent, puis
- on dépose directement au-dessus dudit revêtement permanent un revêtement temporaire comprenant, en tant que couche la plus proche du substrat, au moins une couche mince soluble dans un solvant, surmontée par au moins une couche fonctionnelle, puis
- on fait subir un traitement thermique au substrat ainsi revêtu, ledit traitement thermique, destiné à améliorer la cristallisation d'au moins une couche mince du revêtement permanent, étant choisi parmi les traitements de trempe, de recuit, de recuit rapide, puis
- on traite ledit substrat revêtu à l'aide dudit solvant, de manière à retirer de la surface dudit substrat ledit revêtement temporaire.

La présence, directement au-dessus du revêtement permanent, d'une couche soluble dans un solvant, permet, à l'issue du traitement thermique, ou lors d'une étape ultérieure, d'éliminer la totalité du revêtement temporaire grâce à un simple lavage à l'aide dudit solvant. L'étape de retrait du revêtement temporaire peut avantageusement être mise en oeuvre après des étapes de transport, de découpe et de manutention du substrat, le revêtement temporaire pouvant alors protéger la surface du substrat contre les rayures.

Le substrat est de préférence une feuille de verre ou de vitrocéramique. Il peut également s'agir d'une feuille d'une matière polymérique comme par exemple le polycarbonate, le polyméthacrylate de méthyle ou encore le polyéthylènetérephtalate (PET). Le substrat est de préférence transparent, incolore (il s'agit alors d'un verre clair ou extra-clair) ou coloré, par exemple en bleu, gris ou bronze. Le verre est de préférence de type silico-sodo-calcique, mais il peut également être en verre de type borosilicate ou alumino-borosilicate. Le substrat possède avantageusement au moins une dimension supérieure ou égale à 1 m, voire 2 m et même 3 m. L'épaisseur du substrat varie généralement entre 0,5 mm et 19 mm, de préférence entre 0,7 et 9 mm, notamment entre 2 et 8 mm, voire entre 4 et 6 mm. Le substrat peut être plan ou bombé, voire flexible.

Le substrat de verre est de préférence du type flotté, c'est-à-dire susceptible d'avoir été obtenu par un procédé consistant à déverser le verre fondu sur un bain d'étain en fusion (bain « float »). Dans ce cas, la couche à traiter peut aussi bien être déposée sur la face « étain » que sur la face « atmosphère » du substrat. On entend par faces « atmosphère » et « étain », les faces du substrat ayant été respectivement en contact avec l'atmosphère régnant dans le bain float et en contact avec l'étain fondu. La face étain contient une faible quantité superficielle d'étain ayant diffusé dans la structure du verre. La feuille de verre peut également être obtenue par laminage entre deux rouleaux, technique permettant en particulier d'imprimer des motifs à la surface du verre.

En particulier pour les applications dans le domaine du photovoltaïque, lorsque le revêtement permanent comprend une couche d'un oxyde transparent électro-conducteur (TCO), il est préférable que le substrat soit en verre extra-clair ou ultra-clair, c'est-à-dire dont la transmission lumineuse ou énergétique est supérieure ou égale à 90%, notamment 90,5%, voire 91% et même 91,5%. La transmission lumineuse, souvent abrégée « TL », est calculée selon la norme ISO 9050:2003 et ramenée à une épaisseur de verre de 3,2 mm. La transmission énergétique, abrégée « TE », est également calculée selon la norme ISO 9050:2003 et ramenée à une épaisseur de verre de 3,2 mm. De tels verres sont généralement obtenus en utilisant des matières premières appauvries en fer, de manière à ce que la teneur en oxyde de fer dans le verre final soit d'au plus 0,02%, notamment 0,01%. Pour optimiser encore cette transmission, il est préférable que le rédox du verre (c'est-à-dire le rapport entre la teneur pondérale en fer ferreux, exprimée en FeO et la teneur pondérale en fer total, exprimée en Fe₂O₃) soit inférieur ou égal à 20%, de préférence 10% et même nul. De tels rédox ou transmissions peuvent être obtenus en particulier en oxydant le fer à l'aide d'oxyde d'antimoine ou de cérium, ou en ajoutant au verre de l'oxyde de tungstène en une teneur pondérale comprise entre 0,1 et 2% et/ou de l'oxyde de potassium en une teneur pondérale comprise entre 1,5 et 10%, tel qu'enseigné dans les demandes FR-A-2 921 356 et FR-A-2 921 357. Il est également possible de buller un gaz oxydant dans le bain de verre après l'étape d'affinage, tel qu'enseigné dans la demande internationale WO 2009/115725.

Dans les applications photovoltaïques, les dimensions du substrat de verre sont typiquement les suivantes : 0,6*1,2 m² ou 1,1*1,3 m² ou encore 2,2*2,6 m² pour une épaisseur comprise entre 1,6 et 6 mm, notamment entre 2,9 et 4 mm.

Le revêtement permanent comprend de préférence au moins une couche mince à base (ou constituée) d'un matériau choisi parmi les oxydes transparents électro-conducteurs (TCO), l'argent et le dioxyde de titane.

Parmi les TCO, on peut citer les couches minces à base d'oxydes mixtes d'étain et d'indium (appelées « ITO »), à base d'oxydes mixtes d'indium et de zinc (appelées « IZO »), à base d'oxyde de zinc dopé au gallium ou à l'aluminium, à base d'oxyde de titane dopé au niobium, à base de stannate de cadmium ou de zinc, à base d'oxyde d'étain dopé au fluor et/ou à l'antimoine. Ces différentes couches sont employées dans de nombreux systèmes où les propriétés de transparence et de conductivité électrique sont nécessaires : écrans à cristaux liquides (LCD), capteurs solaires ou photovoltaïques, dispositifs électrochromes ou électroluminescents...

Les taux de dopage, correspondant au poids d'oxyde de dopant rapporté au poids total sont en général inférieurs à 10%, voire 5%. Dans le cas de l'oxyde de zinc dopé à l'aluminium, le taux de dopage (c'est-à-dire le poids d'oxyde d'aluminium rapporté au poids total) est de préférence inférieur à 3%. Dans le cas de l'oxyde de gallium, le taux de dopage peut être plus élevé, typiquement compris entre 5 et 6%. L'épaisseur de la couche en TCO est de préférence comprise entre 2 et 1000 nm, notamment entre 50 et 800 nm, voire entre 150 et 600 nm.

Le revêtement permanent peut comprendre, à partir d'un substrat en verre, une sous-couche faisant office de barrière à la migration des alcalins, notamment à base de matériaux diélectriques tels que nitrures, oxydes ou oxynitrures de silicium ou d'aluminium ou l'un quelconque de leurs mélanges, puis la couche en TCO. La sous-couche évite notamment les effets néfastes de la migration d'ions alcalins, durant le traitement thermique de trempe ou de recuit, ou sous champ électrique durant le fonctionnement de la cellule photovoltaïque.

Les couches minces en argent sont utiles à plusieurs titres : en réfléchissant le rayonnement infrarouge, thermique ou solaire, elles impartissent au matériau des fonctions de basse émissivité ou de contrôle solaire. Conductrices de l'électricité, elles permettent également d'obtenir des matériaux conducteurs, par exemple des vitrages chauffants ou des électrodes. Afin de protéger l'argent contre l'oxydation, des couches diélectriques encadrent la couche d'argent au sein du revêtement permanent. De préférence, l'épaisseur physique de la ou de chaque couche d'argent est comprise entre 6 et 20 nm. Le revêtement permanent comprend de préférence, à partir du substrat, un premier revêtement comprenant au moins une première couche diélectrique, au moins une couche d'argent, éventuellement une couche de sur-bloqueur et un deuxième revêtement comprenant au moins une deuxième couche diélectrique. La couche de sur-bloqueur est destinée à protéger la couche d'argent pendant le dépôt d'une couche ultérieure (par exemple si cette dernière est déposée sous atmosphère oxydante ou nitrurante) et pendant un éventuel traitement thermique du type trempe ou bombage. La couche d'argent peut également être déposée sur et en contact avec une couche de sous-bloqueur. L'empilement peut donc comprendre une couche de sur-bloqueur et/ou une couche de sous-bloqueur encadrant la ou chaque couche d'argent. Les couches de bloqueur (sous-bloqueur et/ou sur-bloqueur) sont généralement à base d'un métal choisi parmi le nickel, le chrome, le titane, le niobium, ou d'un alliage de ces différents métaux. On peut notamment citer les alliages nickel-titane (notamment ceux comprenant environ 50% en poids de chaque métal) ou les alliages nickel-chrome (notamment ceux comprenant 80% en poids de nickel et 20% en poids de chrome). La couche de sur-bloqueur peut encore être constituée de plusieurs couches superposées, par exemple, en s'éloignant du substrat, de titane puis d'un alliage de nickel (notamment un alliage nickel-chrome) ou l'inverse. Les différents métaux ou alliages cités peuvent également être partiellement oxydés, notamment présenter une sous-stoechiométrie en oxygène (par exemple TiOₓ ou NiCrOₓ). La première et/ou la deuxième couche diélectrique est typiquement en oxyde (notamment en oxyde d'étain), ou de préférence en nitrure, notamment en nitrure de silicium (en particulier pour la deuxième couche diélectrique, la plus éloignée du substrat).

Les couches minces en dioxyde de titane ont la particularité d'être autonettoyantes, en facilitant la dégradation des composés organiques sous l'action de rayonnements ultraviolets (phénomène de photocatalyse) et l'élimination des salissures minérales (poussières) sous l'action d'un ruissellement d'eau. Le dioxyde de titane cristallisé sous la forme anatase est bien plus efficace en termes de dégradation des composés organiques que le dioxyde de titane amorphe ou cristallisé sous la forme rutile ou brookite.

Le dioxyde de titane peut éventuellement être dopé par un ion métallique, par exemple un ion d'un métal de transition, ou par des atomes d'azote, de carbone, de fluor.... Le dioxyde de titane peut également être sous-stoechiométrique ou sur-stoechiométrique.

Dans le matériau final (après élimination du revêtement temporaire), l'intégralité de la surface de la couche en dioxyde de titane est de préférence en contact avec l'extérieur de manière à ce que l'oxyde de titane puisse pleinement mettre en application sa fonction autonettoyante. Il peut toutefois être intéressant de revêtir la couche en dioxyde de titane d'une fine couche hydrophile, notamment à base de silice. Afin d'améliorer encore la cristallisation de ces couches, il est possible de prévoir directement sous la couche en dioxyde de titane une sous-couche ayant pour effet de favoriser la croissance cristalline de l'oxyde de titane, notamment sous forme anatase. Il peut notamment s'agir d'une sous-couche en ZrO₂, telle que décrite dans la demande WO 02/40417, ou encore une sous-couche favorisant la croissance hétéro-épitaxiale de l'oxyde de titane sous forme anatase, telle que décrite par exemple dans la demande WO 2005/040058, notamment une couche en BaTiO₃ ou SrTiO₃. D'autres sous-couches peuvent être insérées entre le substrat et la couche en dioxyde de titane. Il peut par exemple s'agir de couches barrières à la migration des alcalins, notamment de couches à base de SiO₂, de SiOC, d'alumine Al₂O₃, de nitrure de silicium Si₃N₄. Il peut encore s'agir de couches ou empilements à fonctions thermiques (couches ou empilements de contrôle solaire ou bas-émissifs, notamment du type comprenant au moins une couche d'argent) ou optiques (par exemples couches ou empilements antireflets).

Quelle que soit la nature du revêtement permanent, la face du substrat opposée à la face munie dudit revêtement permanent peut être nue, ou être recouverte par une ou plusieurs couches minces. Il peut notamment s'agir d'une couche à base de dioxyde de titane, ou de couches à fonctions thermiques (couches ou empilements de contrôle solaire ou bas-émissifs, notamment du type comprenant au moins une couche d'argent) ou optiques (par exemples couches ou empilements antireflets). Dans les applications photovoltaïques, lorsque le revêtement permanent comprend une couche en TCO, la face opposée est avantageusement munie d'un revêtement antireflet. Ce revêtement peut comprendre une couche (par exemple à base de silice poreuse à bas indice de réfraction) ou plusieurs couches : dans ce dernier cas un empilement de couches à base de matériau diélectrique alternant des couches à bas et haut indices de réfraction et se terminant par une couche à bas indice de réfraction est préféré. Il peut notamment s'agir d'un empilement décrit dans la demande WO 01/94989 ou WO 2007/077373. Le revêtement antireflet peut également comprendre en dernière couche une couche autonettoyante et antisalissure à base d'oxyde de titane photocatalytique, tel qu'enseigné dans la demande WO 2005/110937. On peut ainsi obtenir une faible réflexion durable dans le temps.

Le revêtement permanent et le revêtement temporaire peuvent être obtenus par tout type de procédé de dépôt de couche mince. Il peut par exemple s'agir de procédés de type sol-gel, pyrolyse (liquide ou solide), dépôt chimique en phase vapeur (CVD), notamment assisté par plasma (APCVD), éventuellement sous pression atmosphérique (APPECVD), évaporation. De préférence, l'un et/ou l'autre de ces revêtements, notamment les deux, sont obtenus par pulvérisation cathodique, notamment assistée par un champ magnétique (procédé magnétron). Dans ce procédé, un plasma est créé sous un vide poussé au voisinage d'une cible comprenant les éléments chimiques à déposer. Les espèces actives du plasma, en bombardant la cible, arrachent lesdits éléments, qui se déposent sur le substrat en formant la couche mince désirée. Ce procédé est dit « réactif » lorsque la couche est constituée d'un matériau résultant d'une réaction chimique entre les éléments arrachés de la cible et le gaz contenu dans le plasma. L'avantage majeur de ce procédé réside dans la possibilité de déposer sur une même ligne un empilement très complexe de couches en faisant successivement défiler le substrat sous différentes cibles, ce généralement dans un seul et même dispositif.

Le solvant est de préférence à base d'eau. La couche inférieure du revêtement temporaire est donc soluble dans l'eau, et son élimination peut être simplement mise en oeuvre par un lavage à l'eau. D'autres solvants sont possibles, notamment des alcools, mais sont moins préférés pour des raisons environnementales et de coût. Le lavage, notamment à l'eau, peut être mis en oeuvre de manière connue, par exemple au moyen d'une machine à laver. L'étape d'élimination par le solvant, notamment à l'eau, peut être mise en oeuvre après la découpe du verre, juste avant l'étape de transformation, par exemple par intégration du matériau dans un vitrage. Dans ce cas, la couche soluble peut protéger le matériau contre les agressions mécaniques, par exemple les rayures, pendant les étapes de manipulation. L'étape d'élimination peut aussi être mise en oeuvre immédiatement après le traitement thermique.

La couche mince soluble dans l'eau est avantageusement à base (ou constituée) d'un matériau choisi parmi les halogénures métalliques et les sulfates métalliques. Les halogénures métalliques sont notamment choisis parmi NaCl, SnF₂. Le sulfate métallique peut par exemple être Al₂(SO₄)₃. De telles couches peuvent résister aux traitements thermiques habituels.

De préférence, au moins une couche fonctionnelle (qui surmonte la couche soluble au sein du revêtement temporaire) est une couche de protection contre l'oxydation ou une couche absorbant un rayonnement, notamment infrarouge.

Il peut notamment s'agir d'une couche en nitrure, par exemple en nitrure de silicium. Cette couche permet d'obtenir une forte résistance contre l'oxydation, et peut par exemple protéger des couches en TCO lors de traitements de trempe ou de recuit. L'épaisseur de ces couches est typiquement comprise entre 5 et 200 nm, notamment entre 10 et 100 nm.

La couche absorbant le rayonnement infrarouge est particulièrement utile lorsque le traitement thermique est réalisé à l'aide d'une flamme ou d'un rayonnement laser infrarouge. Dans le cas d'un rayonnement laser dans le visible ou l'UV, la couche fonctionnelle absorbera ce rayonnement. Par absorption du rayonnement et réémission de chaleur, cette couche est en effet apte à augmenter la quantité d'énergie reçue par la couche à traiter, et permet donc d'augmenter l'efficacité du traitement. La couche absorbant le rayonnement infrarouge peut être choisie parmi les métaux, comme le titane, le carbone, notamment sous ses formes amorphes ou graphite, des nitrures métalliques, comme le nitrure de niobium. L'épaisseur de ces couches est typiquement comprise entre 1 et 50 nm, notamment entre 2 et 20 nm.

Le revêtement temporaire peut également comprendre, entre la couche soluble et la couche fonctionnelle, une couche destinée à protéger la couche soluble contre l'humidité. Il peut par exemple s'agir de couches en oxyde ou en nitrure, par exemple en silice ou en nitrure de silicium.

Le traitement thermique, destiné à améliorer la cristallisation d'au moins une couche mince du revêtement permanent, est choisi parmi les traitements de trempe, de recuit, de recuit rapide. L'amélioration de la cristallisation peut être quantifiée par une augmentation du taux de cristallisation (la proportion massique ou volumique de matière cristallisée) et/ou de la taille des grains cristallins (ou la taille de domaines cohérents de diffraction mesurés par des méthodes de diffraction des rayons X). Cette amélioration de la cristallisation peut aussi être vérifiée de manière indirecte, par l'amélioration des propriétés de la couche. Dans le cas d'une couche de type TCO ou argent, la résistivité de la couche et son émissivité diminuent, de préférence d'au moins 5% en relatif, voire d'au moins 10% ou 15%. Dans le cas de couches en dioxyde de titane, l'amélioration de la cristallisation se traduit par une augmentation de l'activité photocatalytique. L'activité est généralement évaluée en suivant la dégradation de polluants modèles, tels que l'acide stéarique ou le bleu de méthylène.

Le traitement de trempe ou de recuit est généralement mis en oeuvre dans un four, respectivement de trempe ou de recuisson. L'intégralité du matériau, y compris donc le substrat, est portée à une température élevée, d'au moins 300°C dans le cas de la recuisson, et d'au moins 500°C, voire 600°C, dans le cas d'une trempe.

Le recuit rapide est de préférence mis en oeuvre à l'aide d'une flamme, d'une torche plasma ou d'un rayonnement laser. Dans ce type de procédé, on vient créer un mouvement relatif entre le substrat et le dispositif (flamme, laser, torche plasma) afin de traiter le matériau. Généralement, le dispositif est mobile, et le matériau vient défiler au regard du dispositif de manière à traiter sa surface. Ces procédés permettent d'apporter une grande densité d'énergie à la couche à traiter en un temps très faible, limitant ainsi la diffusion de la chaleur vers le substrat, et donc le chauffage dudit substrat. La température du substrat est généralement d'au plus 100°C, voire 50° et même 30°C pendant le traitement. Chaque point de la couche mince est soumis au traitement de recuit rapide pendant une durée généralement inférieure ou égale à 1 seconde, voire 0,5 seconde.

Le traitement thermique de recuit rapide est de préférence mis en oeuvre à l'aide d'un rayonnement laser, notamment infrarouge, la couche fonctionnelle étant une couche absorbant le rayonnement du laser, notamment telle que décrit précédemment. La longueur d'onde du rayonnement est de préférence comprise entre 530 et 1200 nm, ou entre 600 et 1000 nm, notamment entre 700 et 950 nm, voire entre 800 et 950 nm. On utilise de préférence des diodes laser, émettant par exemple à une longueur d'onde de l'ordre de 808 nm, 880 nm, 915 ou encore 940 nm ou 980 nm. Sous forme de systèmes de diodes, de très fortes puissances peuvent être obtenues, permettant d'atteindre des puissances surfaciques au niveau du revêtement à traiter supérieures à 20kW/cm², voire à 30kW/cm².

Le rayonnement laser est de préférence issu d'au moins un faisceau laser formant une ligne (appelée « ligne laser » dans la suite du texte) qui irradie simultanément toute ou partie de la largeur du substrat. Ce mode est préféré car il évite l'utilisation de systèmes de déplacement coûteux, généralement encombrants, et d'entretien délicat. Le faisceau laser en ligne peut notamment être obtenu à l'aide de systèmes de diodes laser de forte puissance associées à une optique de focalisation. L'épaisseur de la ligne est de préférence comprise entre 0,01 et 1 mm. La longueur de la ligne est typiquement comprise entre 5 mm et 1 m. Le profil de la ligne peut notamment être une courbe de Gauss ou un créneau. La ligne laser irradiant simultanément toute ou partie de la largeur du substrat peut être composée d'une seule ligne (irradiant alors toute la largeur du substrat), ou de plusieurs lignes, éventuellement disjointes. Lorsque plusieurs lignes sont utilisées, il est préférable qu'elles soient disposées de sorte que toute la surface de l'empilement soit traitée. La ou chaque ligne est de préférence disposée perpendiculairement à la direction de défilement du substrat, ou disposée de manière oblique. Les différentes lignes peuvent traiter le substrat simultanément, ou de manière décalée dans le temps. L'important est que toute la surface à traiter le soit. Le substrat peut ainsi être mis en déplacement, notamment en défilement en translation en regard de la ligne laser fixe, généralement en dessous, mais éventuellement au-dessus de la ligne laser. Ce mode de réalisation est particulièrement appréciable pour un traitement en continu. Alternativement, le substrat peut être fixe et le laser peut être mobile. De préférence, la différence entre les vitesses respectives du substrat et du laser est supérieure ou égale à 1 mètre par minute, voire 4 et même 6, 8, 10 ou 15 mètres par minute, ce afin d'assurer une grande vitesse de traitement. Lorsque le substrat est en déplacement, notamment en translation, il peut être mis en mouvement à l'aide de tous moyens mécaniques de convoyage, par exemple à l'aide de bandes, de rouleaux, de plateaux en translation. Le système de convoyage permet de contrôler et réguler la vitesse du déplacement. Si le substrat est en matière organique polymérique souple, le déplacement peut être réalisé à l'aide d'un système d'avance de films sous forme d'une succession de rouleaux. Le laser peut également être mis en mouvement de manière à ajuster sa distance au substrat, ce qui peut être utile en particulier lorsque le substrat est bombé, mais pas seulement. En effet, il est préférable que le faisceau laser soit focalisé sur le revêtement à traiter de sorte que ce dernier soit situé à une distance inférieure ou égale à 1 mm du plan focal. Si le système de déplacement du substrat ou du laser n'est pas suffisamment précis quant à la distance entre le substrat et le plan focal, il convient de préférence de pouvoir ajuster la distance entre le laser et le substrat. Cet ajustement peut être automatique, notamment régulé grâce à une mesure de la distance en amont du traitement.

Le dispositif de rayonnement laser peut être intégré dans une ligne de dépôt de couches, par exemple une ligne de dépôt par pulvérisation cathodique assistée par champ magnétique (procédé magnétron), ou une ligne de dépôt chimique en phase vapeur (CVD), notamment assistée par plasma (PECVD), sous vide ou sous pression atmosphérique (APPECVD). La ligne comprend en général des dispositifs de manutention des substrats, une installation de dépôt, des dispositifs de contrôle optique, des dispositifs d'empilage. Les substrats défilent, par exemple sur des rouleaux convoyeurs, successivement devant chaque dispositif ou chaque installation. Le dispositif de rayonnement laser est de préférence situé juste après l'installation de dépôt de la couche, par exemple à la sortie de l'installation de dépôt. Le substrat revêtu peut ainsi être traité en ligne après le dépôt de la couche, à la sortie de l'installation de dépôt et avant les dispositifs de contrôle optique, ou après les dispositifs de contrôle optique et avant les dispositifs d'empilage des substrats. Le dispositif de rayonnement laser peut aussi être intégré à l'installation de dépôt. Par exemple, le laser peut être introduit dans une des chambres d'une installation de dépôt par pulvérisation cathodique, notamment dans une chambre où l'atmosphère est raréfiée, notamment sous une pression comprise entre 10⁻⁶ mbar et 10² mbar. Le laser peut aussi être disposé en dehors de l'installation de dépôt, mais de manière a traiter un substrat situé à l'intérieur de ladite installation. Il suffit de prévoir à cet effet un hublot transparent à la longueur d'ondes du rayonnement utilisé, au travers duquel le rayon laser viendrait traiter la couche. Il est ainsi possible de traiter une couche (par exemple une couche d'argent) avant le dépôt subséquent d'une autre couche dans la même installation. Lorsqu'une couche absorbante est une surcouche, par exemple métallique, son oxydation lors du traitement peut être gênée dans le cas où le substrat est placé dans une chambre sous vide. Il est possible dans ce cas de traiter l'empilement dans une chambre spéciale, dans laquelle on contrôlerait l'atmosphère oxydante. Que le dispositif de rayonnement laser soit en dehors de ou intégré à l'installation de dépôt, ces procédés « en ligne » sont préférables à un procédé en reprise dans lequel il serait nécessaire d'empiler les substrats de verre entre l'étape de dépôt et le traitement thermique.

Les procédés en reprise peuvent toutefois avoir un intérêt dans les cas où la mise en oeuvre du traitement thermique selon l'invention est faite dans un lieu différent de celui où est réalisé le dépôt, par exemple dans un lieu où est réalisée la transformation du verre. Le dispositif de rayonnement peut donc être intégré à d'autres lignes que la ligne de dépôt de couches. Il peut par exemple être intégré à une ligne de fabrication de vitrages multiples (doubles ou triples vitrages notamment), ou à une ligne de fabrication de vitrages feuilletés. Dans ces différents cas, le traitement thermique est de préférence réalisé avant la réalisation du vitrage multiple ou feuilleté.

Les différentes caractéristiques décrites précédemment peuvent toutes être combinées entre elles, et ces combinaisons ne sont pas explicitement décrites afin de ne pas alourdir inutilement le texte. Quelques combinaisons préférées sont toutefois détaillées ci-après.

Dans un premier mode préféré, le substrat est une feuille de verre, le revêtement permanent comprend une couche mince d'un oxyde transparent électro-conducteur (typiquement ZnO :Al, ou ITO, l'épaisseur géométrique allant généralement de 100 à 800 nm). Le revêtement temporaire déposé sur et en contact avec le revêtement permanent est constitué, depuis la couche la plus proche du substrat, d'une couche soluble dans l'eau (typiquement en un chlorure, tel que NaCl, l'épaisseur géométrique pouvant typiquement aller de 5 à 50 nm), puis d'une couche de protection, typiquement en un nitrure tel que Si₃N₄. L'ensemble de ces couches est déposé par le procédé magnétron. Le substrat ainsi revêtu subit ensuite un traitement thermique de recuit destiné à cristalliser la couche mince d'un oxyde transparent électro-conducteur, afin de réduire sa résistivité. La température d'un tel traitement est typiquement comprise entre 400 et 700°C Après ce traitement thermique, le substrat revêtu est lavé dans l'eau afin d'éliminer le revêtement temporaire.

Dans un deuxième mode préféré, le substrat est une feuille de verre, le revêtement permanent comprend au moins une couche mince d'argent entre au moins deux couches diélectriques. Il s'agit d'une feuille de verre destinée à former un vitrage bas-émissif. Le revêtement temporaire déposé sur et en contact avec le revêtement permanent est constitué, depuis la couche la plus proche du substrat, d'une couche soluble dans l'eau (typiquement en un chlorure, tel que NaCl, l'épaisseur géométrique pouvant typiquement aller de 5 à 50 nm), puis d'une couche absorbant le rayonnement infrarouge (typiquement en titane métallique ou en graphite). L'ensemble de ces couches est déposé par le procédé magnétron. Le substrat ainsi revêtu subit ensuite un traitement thermique de recuit rapide à l'aide d'une ligne laser en regard de laquelle le substrat vient défiler (alternativement, le laser peut être déplacé au-dessus du substrat fixe). Une longueur d'onde typique du laser peut être 980 nm. La couche absorbante est oxydée, dans le cas du titane, et partiellement éliminée dans le cas du graphite. Un lavage à l'eau permet d'éliminer l'ensemble du revêtement temporaire, et donc toute trace de graphite résiduel ou d'oxyde de titane.

Un troisième mode préféré se distingue du deuxième mode en ce que le revêtement permanent est constitué d'une couche de dioxyde de titane, éventuellement déposée sur une sous-couche barrière à la migration des alcalins, par exemple en silice ou oxycarbure de silicium. La couche de dioxyde de titane peut par exemple posséder une épaisseur géométrique allant de 3 à 30 nm, notamment de 5 à 20 nm.

Les exemples qui suivent illustrent l'invention sans toutefois la limiter.

Sur un substrat en verre clair de 4 mm d'épaisseur commercialisé sous la dénomination SGG Planilux par la demanderesse sont déposés différents empilements bas-émissifs. Les empilements sont déposés, de manière connue, sur une ligne de pulvérisation cathodique (procédé magnétron) dans laquelle le substrat vient défiler sous différentes cibles.

Sur un empilement du type Substrat/Si₃N₄/ZnO/Ag/NiCr/ZnO/Si₃N₄ (revêtement permanent), on dépose une couche soluble dans l'eau en NaCl, également par procédé magnétron, à l'aide d'une cible constituée de NaCl et de graphite. Ce dernier est ajouté afin de rendre la cible électriquement conductrice.

Sur cette couche soluble dans l'eau est ensuite déposée une couche de silice de 150 nm d'épaisseur, puis une couche absorbant le rayonnement infrarouge en titane métallique, de 10 nm d'épaisseur. Le dépôt est également réalisé par pulvérisation cathodique magnétron, à l'aide d'une cible de titane, sous atmosphère d'argon. Le revêtement temporaire est donc constitué de la couche de NaCl, surmontée d'une couche de SiO₂ et de la couche de titane.

Les substrats revêtus sont traités à l'aide d'un laser en ligne émettant un rayonnement d'une longueur d'onde de 980 nm, en regard duquel le substrat revêtu vient défiler en translation, à une vitesse comprise entre 10 et 25 mètres par minute.

Après ce traitement de recuit rapide, les substrats revêtus sont nettoyés à l'aide d'un chiffon humide. Ce lavage permet d'éliminer totalement le revêtement temporaire.

La résistance carrée de la couche d'argent a diminué d'au moins 10% en relatif suite au traitement thermique.

## Revendications

1. Procédé d'obtention d'un matériau comprenant un substrat muni sur au moins une de ses faces d'un revêtement permanent comprenant au moins une couche mince, ledit procédé comprenant les étapes suivantes :
- on dépose sur au moins une des faces dudit substrat ledit revêtement permanent, puis
- on dépose directement au-dessus dudit revêtement permanent un revêtement temporaire comprenant, en tant que couche la plus proche du substrat, au moins une couche mince soluble dans un solvant, surmontée par au moins une couche fonctionnelle, puis
- on fait subir un traitement thermique au substrat ainsi revêtu, ledit traitement thermique, destiné à améliorer la cristallisation d'au moins une couche mince du revêtement permanent, étant choisi parmi les traitements de trempe, de recuit, de recuit rapide, puis
- on traite ledit substrat revêtu à l'aide dudit solvant, de manière à retirer de la surface dudit substrat ledit revêtement temporaire.

2. Procédé selon la revendication 1, tel que le substrat est une feuille de verre ou de vitrocéramique.

3. Procédé selon l'une des revendications précédentes, tel que le revêtement permanent comprend au moins une couche mince à base d'un matériau choisi parmi les oxydes transparents électro-conducteurs, l'argent et le dioxyde de titane.

4. Procédé selon la revendication précédente, tel que la au moins une couche mince à base d'un oxyde transparent conducteur est choisi parmi les couches minces à base d'oxydes mixtes d'étain et d'indium, à base d'oxydes mixtes d'indium et de zinc, à base d'oxyde de zinc dopé au gallium ou à l'aluminium, à base d'oxyde de titane dopé au niobium, à base de stannate de cadmium ou de zinc, à base d'oxyde d'étain dopé au fluor et/ou à l'antimoine.

5. Procédé selon l'une des revendications précédentes, tel que le solvant est à base d'eau.

6. Procédé selon la revendication précédente, tel que la couche mince soluble dans l'eau est à base d'un matériau choisi parmi les halogénures métalliques et les sulfates métalliques.

7. Procédé selon la revendication précédente, tel que les halogénures métalliques sont choisis parmi NaCl, SnF₂.

8. Procédé selon la revendication 6, tel que le sulfate métallique est Al₂(SO₄)₃.

9. Procédé selon l'une des revendications précédentes, tel qu'au moins une couche fonctionnelle est une couche de protection contre l'oxydation, ou une couche absorbant un rayonnement, notamment infrarouge.

10. Procédé selon la revendication précédente, tel qu'au moins une couche fonctionnelle est une couche en nitrure, notamment en nitrure de silicium.

11. Procédé selon la revendication 9, tel que la couche absorbant le rayonnement infrarouge est choisie parmi les métaux comme le titane, le carbone, notamment sous ses formes amorphes ou graphite, des nitrures métalliques comme le nitrure de niobium.

12. Procédé selon l'une des revendications précédentes, tel que le revêtement temporaire comprend, entre la couche soluble et la couche fonctionnelle, une couche destinée à protéger la couche soluble contre l'humidité.

13. Procédé selon l'une des revendications précédentes, tel que le traitement thermique de recuit rapide est mis en oeuvre à l'aide d'un rayonnement laser, notamment infrarouge, la couche fonctionnelle étant une couche absorbant le rayonnement du laser.

14. Procédé selon la revendication précédente, tel que la longueur d'onde du rayonnement est comprise entre 530 et 1200 nm.

15. Procédé selon l'une des revendications précédentes, tel que le revêtement permanent et/ou le revêtement temporaire sont obtenus par pulvérisation cathodique, notamment assistée par un champ magnétique.

## Patentansprüche

1. Verfahren zur Herstellung eines Materials, umfassend ein Substrat, das auf mindestens einer seiner Flächen mit einer dauerhaften Beschichtung versehen ist, die mindestens eine Dünnschicht umfasst, wobei das Verfahren die folgenden Schritte umfasst:
- Ablagern der dauerhaften Beschichtung auf mindestens einer der Flächen des Substrats, dann
- Ablagern direkt oberhalb der dauerhaften Beschichtung einer temporären Beschichtung, die als dem Substrat am nächsten gelegene Schicht mindestens eine in einem Lösungsmittel lösliche Dünnschicht umfasst, die von mindestens einer Funktionsschicht überlagert ist, dann
- Unterziehen einer Wärmebehandlung des so beschichteten Substrats, wobei die Wärmebehandlung, die dazu bestimmt ist, die Kristallisation von mindestens einer Dünnschicht der dauerhaften Beschichtung zu verbessern, aus der Gruppe bestehend aus Härten, Anlassen und schnellem thermischen Ausheilen ausgewählt ist, dann
- Behandeln des beschichteten Substrats mithilfe des Lösungsmittels, um die temporäre Beschichtung wieder von der Oberfläche des Substrats zu entfernen.

2. Verfahren nach Anspruch 1, wobei das Substrat eine Glas- oder Glaskeramikscheibe ist.

3. Verfahren nach einem der vorhergehenden Ansprüche, wobei die dauerhafte Beschichtung mindestens eine Dünnschicht umfasst, die auf einem Material basiert, das aus der Gruppe bestehend aus den transparenten elektrisch leitfähigen Oxiden, Silber und Titandioxid ausgewählt ist.

4. Verfahren nach dem vorhergehenden Anspruch, wobei die mindestens eine auf einem transparenten elektrisch leitfähigen Oxid basierende Dünnschicht aus der Gruppe bestehend aus den Dünnschichten basierend auf Zinn- und Indium-Mischoxiden, basierend auf Indium- und Zink-Mischoxiden, basierend auf einem gallium- oder aluminiumdotieren Zinkoxid, basierend auf einem niobiumdotierten Titanoxid, basierend auf Cadmium- oder Zink-Stannat, basierend auf Fluor- und/oder Antimon-dotiertem Zinnoxid ausgewählt ist.

5. Verfahren nach einem der vorhergehenden Ansprüche, wobei das Lösungsmittel ein Lösungsmittel auf Wasserbasis ist.

6. Verfahren nach dem vorhergehenden Anspruch, wobei die wasserlösliche Dünnschicht auf einem Material basiert, das aus den Metallhalogeniden und den Metallsulfaten ausgewählt ist.

7. Verfahren nach dem vorhergehenden Anspruch, wobei die Metallhalogenide aus NaCl, SnF₂ ausgewählt sind.

8. Verfahren nach Anspruch 6, wobei das Metallsulfat Al₂(SO₄)₃ ist.

9. Verfahren nach einem der vorhergehenden Ansprüche, wobei mindestens eine Funktionsschicht eine Oxidationsschutzschicht oder eine Schicht ist, die eine Strahlung, insbesondere Infrarot, absorbiert.

10. Verfahren nach dem vorhergehenden Anspruch, wobei mindestens eine Funktionsschicht eine Nitridschicht, insbesondere eineSiliziumnitridschicht, ist.

11. Verfahren nach Anspruch 9, wobei die Infrarotstrahlung absorbierende Schicht aus Metallen wie Titan, Kohlenstoff, insbesondere aus seiner amorphen oder Grafitform, Metallnitriden wie Niobiumnitrid ausgewählt ist.

12. Verfahren nach einem der vorhergehenden Ansprüche, wobei die temporäre Schicht zwischen der löslichen Schicht und der Funktionsschicht eine Schicht umfasst, die dazu bestimmt ist, die lösliche Schicht gegen Feuchtigkeit zu schützen.

13. Verfahren nach einem der vorhergehenden Ansprüche, wobei die Wärmebehandlung des schnellen thermischen Ausheilens mithilfe von Laserstrahlung, insbesondere Infrarot, ausgeführt wird, wobei die Funktionsschicht eine Laserstrahlung absorbierende Schicht ist.

14. Verfahren nach dem vorhergehenden Anspruch, wobei die Wellenlänge der Strahlung zwischen 530 und 1200 nm liegt.

15. Verfahren nach einem der vorhergehenden Ansprüche, wobei die dauerhafte Beschichtung und/oder die temporäre Beschichtung durch Kathodenzerstäubung, die insbesondere durch ein Magnetfeld unterstützt ist, hergestellt sind.

## Claims

1. A process for obtaining a material comprising a substrate provided on at least one of its faces with a permanent coating comprising at least one thin film, said process comprising the following steps:
- said permanent coating is deposited on at least one of the faces of said substrate; then
- a temporary coating is deposited directly on top of said permanent coating, said temporary coating comprising, as the layer closest to the substrate, at least one thin film soluble in a solvent, surmounted by at least one functional layer; then
- the substrate thus coated is subjected to a heat treatment, said heat treatment, intended for improving the crystallization of at least one thin film of the permanent coating, being chosen from tempering, annealing and rapid annealing treatments; and then
- said coated substrate is treated with said solvent so as to remove said temporary coating from the surface of said substrate.

2. The process as claimed in claim 1, such that the substrate is a glass or glass-ceramic sheet.

3. The process as claimed in either of the preceding claims, such that the permanent coating comprises at least one thin film based on a material chosen from transparent electrically conductive oxides, silver and titanium dioxide.

4. The process as claimed in the preceding claim, such that the at least one thin film based on a transparent electrically conductive oxide is chosen from thin films based on mixed indium tin oxides, based on mixed indium zinc oxides, based on gallium-doped or aluminum-doped zinc oxide, based on niobium-doped titanium oxide, based on cadmium stannate or zinc stannate, based on fluorine-doped and/or antimony-doped tin oxide.

5. The process as claimed in one of the preceding claims, such that the solvent is water-based.

6. The process as claimed in the preceding claim, such that the water-soluble thin film is based on a material chosen from metal halides and metal sulfates.

7. The process as claimed in the preceding claim, such that the metal halides are chosen from NaCl and SnF₂

8. The process as claimed in Claim 6, such that the metal sulfate is Al₂(SO₄)₃.

9. The process as claimed in one of the preceding claims, such that at least one functional layer is an oxidation protection layer or a radiation-absorbing layer, especially an infrared-absorbing layer.

10. The process as claimed in the preceding claim, such that at least one functional layer is a nitride layer, especially a silicon nitride layer.

11. The process as claimed in Claim 9, such that the layer absorbing infrared radiation is chosen from metals, such as titanium, carbon, especially in its amorphous or graphite forms, and metal nitrides, such as niobium nitride.

12. The process as claimed in one of the preceding claims, such that the temporary coating comprises, between the soluble layer and the functional layer, a layer intended to protect the soluble layer from moisture.

13. The process as claimed in one of the preceding claims, such that the rapid annealing heat treatment is carried out using laser radiation, especially infrared radiation, the functional layer being a layer that absorbs the laser radiation.

14. The process as claimed in the preceding claim, such that the wavelength of the radiation is between 530 and 1200 nm.

15. The process as claimed in one the preceding claims, such that the permanent coating and/or the temporary coating are obtained by sputtering, especially magnetically enhanced sputtering.
